# EUROPÄISCHE PATENTSCHRIFT

(11) **EP 4 083 981 B1**
(45) Veröffentlichungstag und Bekanntmachung des Hinweises auf die Patenterteilung: **01.07.2026**
(21) Anmeldenummer: 22170744.1
(22) Anmeldetag: 29.04.2022
(51) Int. Cl.: G09F 13/18, F21V 17/00, F21V 23/00, G08B 7/06, H02J 50/10, G09F 13/04

(54) **SICHERHEITZEICHENLEUCHTE UND LEUCHTDIODENMODUL FÜR EINE SICHERHEITSZEICHENLEUCHTE**
SAFETY SIGNALLING LIGHT AND LED MODULE FOR A SECURITY SIGNALLING LIGHT
LUMINAIRE DE SIGNALISATION DE SÉCURITÉ ET MODULE À DEL POUR UN LUMINAIRE DE SIGNALISATION DE SÉCURITÉ

(30) Priorität: 29.04.2021 DE 102021111055
(43) Veröffentlichungstag der Anmeldung: 02.11.2022
(73) Patentinhaber: Zumtobel Lighting GmbH, 6850 Dornbirn (AT)
(72) Erfinder: Mayr, Gregor, 6850 Dornbirn (AT)
(74) Vertreter: Beder, Jens

(56) Entgegenhaltungen:
- EP-B1- 2 756 488
- AU-A1- 2018 323 003
- DE-U1- 202006 014 352
- JP-A- 2020 064 748

## Beschreibung

Die vorliegende Erfindung betrifft eine Sicherheitszeichenleuchte und ein System umfassend ein Leuchtdiodenmodul und eine solche Sicherheitszeichenleuchte.

Sicherheitszeichenleuchten werden in Gebäuden verwendet, um ein Sicherheitszeichen, wie zum Beispiel Hinweise auf einen Fluchtweg, beleuchtet anzuzeigen. Folglich kann das durch die Sicherheitszeichenleuchte angezeigte Sicherheitszeichen auch in einem dunklen Bereich, wie zum Beispiel einem fensterlosen Raum (z.B. Zimmer oder Flur) ohne Beleuchtung (z.B. Beleuchtung defekt oder ausgefallen), durch Personen wahrgenommen werden. Dies ist wichtig, da ein Sicherheitszeichen unabhängig von dem Zustand der Beleuchtung in einem Bereich für Personen in diesem Bereich sichtbar angezeigt werden soll.

JP 2020 064748 A offenbart, eine LED-Lampe in Form einer Leuchtstoffröhre, die einen zylindrischen Körper mit einem Anschluss zum Empfangen von kommerziellen Wechselstrom an den Enden des zylindrischen Körpers aufweist. An einem Anschluss weist der zylindrische Körper der Leuchtstoffröhre einen weiteren kürzeren zylindrischen Körper auf, der zu dem zylindrischen Körper der Leuchtstoffröhre eine rechtwinklige zylindrische Aussparung bildet, die eine Modulkassette aufnehmen kann. An dem innerhalb des zylindrischen Körpers der Leuchtstoffröhre liegendem Ende der rechtwinkligen zylindrischen Aussparung ist innerhalb des zylindrischen Körpers der Leuchtstoffröhre eine mit Spule in direktem Kontakt zu der rechtwinkligen zylindrischen Aussparung angeordnet. Die Modulkassette kann in der rechtwinkligen zylindrischen Aussparung derart angeordnet werden, dass eine Spule einer Energieempfangseinheit der Modulkassette und die Spule der Induktionsenergieübertragungseinheit so nah wie möglich beieinander nur vom Hartz des weiteren, kürzeren zylindrischen Körpers getrennt sind.

DE 202006 014352 U1 offenbart eine Sicherheitszeichenleuchte mit einer Scheibe aus lichtdurchlässigen Material und einer Lichtquelle, durch die Licht erzeugt werden kann, welche durch die Scheibe abgegeben wird. Das Licht wird an einer Kante der Scheibe zugeführt und über Flächen, an denen ein Sicherheitszeichen dargestellt wird, abgegeben. Zur Beleuchtung der Umgebung der Sicherheitszeichenleuchte kann ferner eine zweite Lichtquelle am Rand der Scheibe vorgesehen sein.

Neben dem Vorsehen von Sicherheitszeichenleuchten in einem Bereich zum Anzeigen von Sicherheitszeichen in dem Bereich, sind in einem Gebäude zusätzlich in jedem Bereich Sicherheitsleuchten bzw. Notleuchten vorzusehen, um ein Grundbeleuchtung (zum Beispiel eines Fluchtwegs) sicherzustellen, sodass Personen in einem Notfall, wie zum Beispiel Feuer und/oder Netzausfall, sicher ein Gebäude verlassen können. Das Vorsehen von zusätzlichen Sicherheitsleuchten ist mit zusätzlichen Installationsaufwand und Kosten verbunden.

Es ist daher eine Aufgabe der vorliegenden Erfindung, eine Sicherheitszeichenleuchte bereitzustellen und ein System mit einer solchen Sicherheitszeichenleuchte, die den vorstehend beschriebenen Nachteil bezüglich zusätzlicher separater Sicherheitsleuchten ausräumen kann.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem Aspekt der vorliegenden Erfindung wird eine Sicherheitszeichenleuchte bereitgestellt. Die Sicherheitszeichenleuchte umfasst einen zumindest teilweise lichtdurchlässigen Sicherheitszeichenabschnitt mit zwei voneinander abgewandten Oberflächen, die durch wenigstens zwei Seitenflächen miteinander verbunden sind. Wenigstens eine Oberfläche der zwei voneinander abgewandten Oberflächen umfasst ein Sicherheitszeichen. Die Sicherheitszeichenleuchte umfasst ferner wenigstens ein erstes Leuchtdiodenmodul, das wenigstens eine Leuchtdiode zur Beleuchtung des Sicherheitszeichenabschnitts umfasst. Der

Sicherheitszeichenabschnitt ist bezüglich des wenigstens einen ersten Leuchtdiodenmoduls derart angeordnet, dass das wenigstens eine erste Leuchtdiodenmodul dazu eingerichtet ist, Licht über eine erste Seitenfläche der wenigstens zwei Seitenflächen des Sicherheitszeichenabschnitts in den Sicherheitszeichenabschnitt einzukoppeln. Eine zweite Seitenfläche der wenigstens zwei Seitenflächen des Sicherheitszeichenabschnitts ist derart ausgelegt, dass ein zweites Leuchtdiodenmodul an der zweiten Seitenfläche des Sicherheitszeichenabschnitts anordenbar ist. Das zweite Leuchtdiodenmodul umfasst wenigstens eine Leuchtdiode.

Für die nachfolgenden Ausführungen wird jeweils nur auf ein erstes Leuchtdiodenmodul Bezug genommen. Die Ausführungen treffen aber auch auf eine Mehrzahl erster Leuchtdiodenmodule zu.

Die Sicherheitszeichenleuchte umfasst im Bereich des ersten Leuchtdiodenmoduls wenigstens eine Leiterschleife, die zum Beispiel in das erste Leuchtdiodenmodul integriert oder direkt bei dem ersten Leuchtdiodenmodul angeordnet ist. Die Sicherheitszeichenleuchte ist dazu eingerichtet, das zweite Leuchtdiodenmodul mit elektrischer Energie mittels einer induktiven Übertragung der elektrischen Energie ausgehend von der wenigstens einen Leiterschleife der Sicherheitszeichenleuchte an wenigstens eine Leiterschleife zur elektrischen Versorgung des zweiten Leuchtdiodenmoduls elektrisch zu versorgen, wenn das zweite Leuchtdiodenmodul und die wenigstens eine Leiterschleife zur elektrischen Versorgung des zweiten Leuchtdiodenmoduls an der zweiten Seitenfläche des Sicherheitszeichenabschnitts angeordnet sind.

Die wenigstens eine Leiterschleife der Sicherheitszeichenleuchte kann als "wenigstens eine erste Leiterschleife" und die wenigstens eine Leiterschleife zur elektrischen Versorgung des zweiten Leuchtdiodenmoduls kann als "wenigstens eine zweite Leiterschleife" bezeichnet werden.

Mit anderen Worten ist, neben der wenigstens einen Leiterschleife (erste Leiterschleife) der Sicherheitszeichenleuchte, wenigstens eine weitere Leiterschleife (zweite Leiterschleife) zur elektrischen Versorgung des zweiten Leuchtdiodenmoduls, insbesondere der wenigstens einen Leuchtdiode des zweiten Leuchtdiodenmoduls, an der zweiten Seitenfläche des Sicherheitszeichenabschnitts anordenbar. Das zweite Leuchtdiodenmodul, insbesondere die wenigstens eine Leuchtdiode des zweiten Leuchtdiodenmoduls, ist ausgehend von dieser wenigstens einen weiteren Leiterschleife (zweite Leiterschleife) elektrisch versorgbar, wenn das zweite Leuchtdiodenmodul und diese wenigstens eine weitere Leiterschleife (zweite Leiterschleife) an der zweiten Seitenfläche des Sicherheitszeichenabschnitts angeordnet sind.

Gemäß einer Ausführungsform kann der Sicherheitszeichenabschnitt die wenigstens eine Leiterschleife (zweite Leiterschleife) zur elektrischen Versorgung des zweiten Leuchtdiodenmoduls im Bereich der zweiten Seitenfläche umfassen. Diese wenigstens eine Leiterschleife kann auf der zweiten Seitenfläche des Sicherheitszeichenabschnitts aufgedruckt ("aufgeprintet") sein oder an der zweiten Seitenfläche in dem Sicherheitszeichenabschnitt integriert, optional vergossen sein. Hierbei kann optional diese wenigstens eine Leiterschleife teilweise an der zweiten Seitenfläche in dem Sicherheitszeichenabschnitt integriert, optional vergossen sein. Insbesondere kann der Sicherheitszeichenabschnitt diese wenigstens eine Leiterschleife im Bereich der zweiten Seitenfläche derart umfassen, dass das zweite Leuchtdiodenmodul mit dieser wenigstens einen Leiterschleife zur elektrischen Versorgung des zweiten Leuchtdiodenmoduls elektrisch kontaktiert bzw. verbunden ist, wenn das zweite Leuchtdiodenmodul an der zweiten Seitenfläche des Sicherheitszeichenabschnitts angeordnet ist. Folglich kann dann die wenigstens eine Leuchtdiode des zweiten Leuchtdiodenmoduls ausgehend von dieser wenigsten einen Leiterschleife elektrisch versorgt werden, wenn das zweite Leuchtdiodenmodul an der zweiten Seitenfläche des Sicherheitszeichenabschnitts angeordnet ist. In diesem Fall ist die Sicherheitszeichenleuchte dazu eingerichtet, das zweite Leuchtdiodenmodul mit elektrischer Energie mittels einer induktiven Übertragung der elektrischen Energie ausgehend von der wenigstens einen im Bereich des ersten Leuchtdiodenmoduls angeordneten Leiterschleife (erste Leiterschleife) an die wenigstens eine im Bereich der zweiten Seitenfläche des Sicherheitszeichenabschnitts angeordneten Leiterschleife (zweite Leiterschleife) elektrisch zu versorgen, wenn das zweite Leuchtdiodenmodul an der zweiten Seitenfläche des Sicherheitszeichenabschnitts angeordnet ist.

Gemäß einer weiteren Ausführungsform kann das zweite Leuchtdiodenmodul die wenigstens eine Leiterschleife (zweite Leiterschleife) zur elektrischen Versorgung des zweiten Leuchtdiodenmoduls umfassen. In diesem Fall ist die Sicherheitszeichenleuchte dazu eingerichtet, das zweite Leuchtdiodenmodul mit elektrischer Energie mittels einer induktiven Übertragung der elektrischen Energie ausgehend von der wenigstens einen im Bereich des ersten Leuchtdiodenmoduls angeordneten Leiterschleife (erste Leiterschleife) an die wenigstens eine Leiterschleife (zweite Leiterschleife) des zweiten Leuchtdiodenmoduls elektrisch zu versorgen, wenn das zweite Leuchtdiodenmodul an der zweiten Seitenfläche des Sicherheitszeichenabschnitts angeordnet ist.

Mit anderen Worten schlägt die vorliegende Erfindung vor, eine Sicherheitszeichenleuchte mit einem Sicherheitszeichenabschnitt und einem ersten Leuchtdiodenmodul zum Beleuchten des Sicherheitszeichenabschnitts bereitzustellen, wobei die Sicherheitszeichenleuchte dazu eingerichtet ist, dass an dem Sicherheitszeichenabschnitt ein zweites Leuchtdiodenmodul zum Beleuchten der Umgebung des Sicherheitszeichenabschnitts anordenbar ist, und das zweite Leuchtdiodenmodul ausgehend von der Sicherheitszeichenleuchte mit elektrischer Energie drahtlos versorgbar ist, wenn das zweite Leuchtdiodenmodul an dem Sicherheitszeichenabschnitt angeordnet ist.

Folglich erlaubt die erfindungsgemäße Sicherheitszeichenleuchte zum einen eine beleuchtete Anzeige eines Sicherheitszeichens. Dies wird durch den Sicherheitszeichenabschnitt sowie das erste Leuchtdiodenmodul ermöglicht. In den Sicherheitszeichenabschnitt über die erste Seitenfläche des Sicherheitszeichenabschnitts eingekoppeltes Licht beleuchtet das Sicherheitszeichen der wenigstens einen Oberfläche des Sicherheitszeichenabschnitts. Zum anderen ermöglicht die erfindungsgemäße Sicherheitszeichenleuchte eine Aufrüstung der Sicherheitszeichenleuchte mit einer weiteren Lichtquelle in Form eines zweiten Leuchtdiodenmoduls zur Beleuchtung der Umgebung der Sicherheitszeichenleuchte. Die Sicherheitszeichenleuchte ist dazu eingerichtet, mittels einer induktiven Übertragung elektrischer Energie das zweite Leuchtdiodenmodul elektrisch zu versorgen, wenn das zweite Leuchtdiodenmodul an dem Sicherheitszeichenabschnitt angeordnet ist.

Folglich beim Einsatz der erfindungsgemäßen Sicherheitszeichenleuchte in einem Bereich muss für eine Notfallbeleuchtung nicht zusätzlich eine separate Sicherheitsleuchte in dem Bereich installiert werden, was mit zusätzlichen Installationsaufwand (verlegen vom elektrischen Leitungen zur elektrischen Versorgung der zusätzlichen Sicherheitsleuchte) und Kosten verbunden wäre. Stattdessen ist es ausreichend ein zusätzliches Leuchtdiodenmodul (das zweite Leuchtdiodenmodul) am Sicherheitszeichenabschnitt anzuordnen. Dies ist mit keinem zusätzlichen Installationsaufwand verbunden, da die elektrische Versorgung des am Sicherheitsabschnitt angeordneten zusätzlichen Leuchtdiodenmoduls durch bereits in der Sicherheitszeichenleuchte vorhandene Komponenten erfolgt. Ferner ist aufgrund der fehlenden Kosten für eine Installation einer zusätzlichen separaten Sicherheitsleuchte die Kosten bei der erfindungsgemäßen Sicherheitszeichenleuchte geringer.

Ein weiterer Vorteil der erfindungsgemäßen Sicherheitszeichenleuchte ist, dass diese rahmenlos ausgestaltet werden kann, da ein Rahmen für ein Verdecken von elektrischen Leitungen zwischen der Sicherheitszeichenleuchte und dem zweiten Leuchtdiodenmodul zur elektrischen Versorgung des zweiten Leuchtdiodenmoduls nicht benötigt wird, wenn das zweite Leuchtdiodenmodul an dem Sicherheitszeichenabschnitt angeordnet ist. Die elektrische Versorgung des zweiten Leuchtdiodenmoduls durch die Sicherheitszeichenleuchte, wenn das zweite Leuchtdiodenmodul an dem Sicherheitszeichenabschnitt angeordnet ist, kann drahtlos (insbesondere mittels einer induktiven Übertragung elektrischer Energie) erfolgen, sodass keine elektrischen Leitungen für diese Versorgung in der Sicherheitszeichenleuchte vorgesehen sein müssen.

Der Sicherheitszeichenabschnitt kann bezüglich des ersten Leuchtdiodenmoduls derart angeordnet sein, dass durch das erste Leuchtdiodenmodul abgegebenes Licht über die erste Seitenfläche des Sicherheitszeichenabschnitts in den Sicherheitszeichenabschnitt eingekoppelt wird. Der Sicherheitszeichenabschnitt ist derart ausgestaltet, dass das über die erste Seitenfläche des Sicherheitszeichenabschnitts in den Sicherheitszeichenabschnitt eingekoppelte Licht das Sicherheitszeichen der wenigstens einen Oberfläche des Sicherheitszeichenabschnitts beleuchtet. Der Sicherheitszeichenabschnitt kann eine Lichtleiterplatte sein, in die Licht über die erste Seitenfläche einkoppelbar ist. Das in die Lichtleiterplatte eingekoppelte Licht beleuchtet das Sicherheitszeichen der wenigstens einen Oberfläche der Lichtleiterplatte. Die Begriffe "Platte" und "Scheibe" können synonym verwendet werden und bezeichnen ein flächig ausgedehntes Element. Folglich kann eine Lichtleiterplatte auch als eine "Lichtleiterscheibe" bezeichnet werden.

Das erste Leuchtdiodenmodul kann eine Mehrzahl von Leuchtdioden, d.h. zwei oder mehrere Leuchtdioden, umfassen.

Das Sicherheitszeichen kann einem Piktogramm entsprechen. Das Sicherheitszeichen ist insbesondere in einem lichtdurchlässigen Bereich des Sicherheitszeichenabschnitts angeordnet. Optional kann jede Oberfläche der zwei voneinander abgewandten Oberflächen ein Sicherheitszeichen umfassen. Insbesondere kann das Sicherheitszeichen auf der wenigstens einen Oberfläche aufgebracht sein. Die zwei Oberflächen können rechteckförmig, optional quadratisch, sein. Die wenigstens zwei Seitenflächen können rechteckförmig sein. Die Länge der Rechteckform der zwei Oberflächen kann wenigstens zweimal größer sein als die Höhe der Rechteckform der zwei Oberflächen. Die Länge kann zum Beispiel 30 cm betragen.

Die erste Seitenfläche und die zweite Seitenfläche des Sicherheitszeichenabschnitts sind vorzugsweise voneinander abgewandt. Das heißt, die erste Seitenfläche und die zweite Seiten Fläche können sich entsprechende Flächen sein. Insbesondere kann die erste Seitenfläche eine Oberseite des Sicherheitszeichenabschnitts und die zweite Seitenfläche eine Unterseite des Sicherheitszeichenabschnitts sein, wenn die Sicherheitszeichenleuchte in einem Raum an einer Decke oder Wand befestigt ist. Die Oberseite des Sicherheitszeichenabschnitts ist dann in Richtung der Decke des Raums und die Unterseite des Sicherheitszeichenabschnitts ist dann in Richtung des Bodens des Raums gerichtet.

Zumindest eine der zwei Oberflächen, der ersten Seitenfläche und der zweiten Seitenfläche kann eine Teilfläche sein, d.h. Bestandteil einer anderen Fläche sein.

Der Sicherheitszeichenabschnitt kann mit einem Gehäuse der Sicherheitszeichenleuchte, das das erste Leuchtdiodenmodul und die wenigstens eine Leiterschleife (erste Leiterschleife) der Sicherheitszeichenleuchte umfasst, lösbar verbunden sein bzw. an dem Gehäuse lösbar befestigt sein. Der Sicherheitszeichenabschnitt kann mit dem Gehäuse auf jede bekannte Art verbunden sein bzw. an dem Gehäuse auf jede bekannte Art befestigt sein.

Optional ist die wenigstens eine Leiterschleife (zweite Leiterschleife) zur elektrischen Versorgung des zweiten Leuchtdiodenmoduls derart an der zweiten Seitenfläche des Sicherheitszeichenabschnitts angeordnet, dass die wenigstens eine Leiterschleife (erste Leiterschleife) der Sicherheitszeichenleuchte und die wenigstens eine Leiterschleife (zweite Leiterschleife) zur elektrischen Versorgung des zweiten Leuchtdiodenmoduls miteinander induktiv koppelbar sind (für eine induktive Übertragung elektrischer Energie).

Für den Fall, dass das zweite Leuchtdiodenmodul die wenigstens eine Leiterschleife (zweite Leiterschleife) zur elektrischen Versorgung des zweiten Leuchtdiodenmoduls umfasst, ist vorzugsweise die zweite Seitenfläche des Sicherheitszeichenabschnitts derart eingerichtet, dass das zweite Leuchtdiodenmodul derart an der zweiten Seitenfläche anordenbar ist, dass die wenigstens eine Leiterschleife (erste Leiterschleife) der Sicherheitszeichenleuchte und die wenigstens eine Leiterschleife (zweite Leiterschleife) des zweiten Leuchtdiodenmoduls miteinander induktiv koppelbar sind (für eine induktive Übertragung elektrischer Energie), wenn das zweite Leuchtdiodenmodul an der zweiten Seitenfläche angeordnet ist.

Da die für die elektrische Versorgung des zweiten Leuchtdiodenmoduls induktiv zu übertragene elektrische Energie bzw. Leistung sehr klein sein kann, kann bereits eine einzelne im Bereich des ersten Leuchtdiodenmoduls angeordnete Leiterschleife und eine einzelne im Bereich der zweiten Seitenfläche des Sicherheitszeichenabschnitts angeordnete Leiterschleife für eine induktive Übertragung elektrischer Energie von der Sicherheitszeichenleuchte an das zweite Leuchtdiodenmodul (wenn dieses an der zweiten Seitenfläche des Sicherheitszeichenabschnitts angeordnet ist) ausreichend sein. Die zu übertragende elektrische Leistung bzw. Energie von der wenigstens einen Leiterschleife der Sicherheitszeichenleuchte zu der wenigstens einen Leiterschleife zur elektrischen Versorgung des zweiten Leuchtdiodenmoduls kann zum Beispiel 1 Watt entsprechen. Die Distanz zwischen diesen beiden Leiterschleifen kann größer gleich 11 cm und kleiner gleich 15 cm sein, wenn die wenigstens eine Leiterschleife zur elektrischen Versorgung des zweiten Leuchtdiodenmoduls an der zweiten Seitenfläche des Sicherheitszeichenabschnitts angeordnet ist. Die Sicherheitszeichenleuchte kann dazu eingerichtet sein eine elektrische Leistung von 10 Watt über eine Distanz von 9 cm induktiv zu übertragen. Das zweite Leuchtdiodenmodul kann dazu eingerichtet sein, mit einer elektrischen Leistung kleiner gleich 1 Watt elektrisch versorgt zu werden.

Das zweite Leuchtdiodenmodul kann derart an der zweiten Seitenfläche des Sicherheitszeichenabschnitts angeordnet sein, dass die wenigstens eine Leuchtdiode des zweiten Leuchtdiodenmoduls zur Beleuchtung einer Umgebung der Sicherheitszeichenleuchte eingerichtet ist.

Falls das zweite Leuchtdiodenmodul die wenigstens eine Leiterschleife (zweite Leiterschleife) zur elektrischen Versorgung des zweiten Leuchtdiodenmoduls umfasst, kann das zweite Leuchtdiodenmodul insbesondere derart an der zweiten Seitenfläche des Sicherheitszeichenabschnitts angeordnet sein, dass die wenigstens eine Leiterschleife (erste Leiterschleife) der Sicherheitszeichenleuchte zur induktiven Übertragung elektrischer Energie an die wenigstens eine Leiterschleife des zweiten Leuchtdiodenmoduls eingerichtet ist. Unter wenigstens einer Leiterschleife ist eine oder mehrere Leiterschleifen zu verstehen.

Falls der Sicherheitszeichenabschnitt im Bereich der zweiten Seitenfläche die wenigstens eine Leiterschleife (zweite Leiterschleife) zur elektrischen Versorgung des zweiten Leuchtdiodenmoduls umfasst, kann das zweite Leuchtdiodenmodul insbesondere derart an der zweiten Seitenfläche des Sicherheitszeichenabschnitts angeordnet sein, dass das zweite Leuchtdiodenmodul mit der wenigstens einen Leiterschleife (zweite Leiterschleife) zur elektrischen Versorgung des zweiten Leuchtdiodenmoduls elektrisch kontaktiert bzw. verbunden ist.

Die wenigstens eine Leiterschleife (erste Leiterschleife) der Sicherheitszeichenleuchte kann in oder an dem ersten Leuchtdiodenmodul angeordnet sein. Optional kann die wenigstens eine Leiterschleife des ersten Leuchtdiodenmoduls teilweise in dem ersten Leuchtdiodenmodul und teilweise an dem ersten Leuchtdiodenmodul angeordnet sein.

Die wenigstens eine Leiterschleife (erste Leiterschleife) der Sicherheitszeichenleuchte kann auf der Seite des ersten Leuchtdiodenmoduls an dem ersten Leuchtdiodenmodul angeordnet sein, die der ersten Seitenfläche der wenigstens zwei Seitenflächen des Sicherheitszeichenabschnitts zugewandt ist. Diese Seite des ersten Leuchtdiodenmoduls kann die Lichtabgabefläche des ersten Leuchtdiodenmoduls umfassen oder dieser entsprechen. Alternativ kann die wenigstens eine Leiterschleife (erste Leiterschleife) der Sicherheitszeichenleuchte auf einer anderen Seite des ersten Leuchtdiodenmoduls an dem ersten Leuchtdiodenmodul angeordnet sein, zum Beispiel auf der Seite des ersten Leuchtdiodenmoduls, die der ersten Seitenfläche der wenigstens zwei Seitenflächen des Sicherheitszeichenabschnitts abgewandt ist.

Die wenigstens eine Leiterschleife (erste Leiterschleife) der Sicherheitszeichenleuchte kann auf einer Seite des ersten Leuchtdiodenmoduls aufgedruckt ("aufgeprintet") sein oder in einer Seite des ersten Leuchtdiodenmoduls integriert, optional vergossen sein.

Das erste Leuchtdiodenmodul kann eine Mehrzahl von Leuchtdioden zur Beleuchtung des Sicherheitszeichenabschnitts umfassen. Die wenigstens eine Leiterschleife (erste Leiterschleife) der Sicherheitszeichenleuchte kann zwischen zwei Leuchtdioden der Mehrzahl von Leuchtdioden, angeordnet sein. Optional ist die wenigstens eine Leiterschleife der Sicherheitszeichenleuchte zwischen zwei Leuchtdioden mittig einer Lichtabgabefläche des ersten Leuchtdiodenmoduls angeordnet. Die Sicherheitszeichenleuchte kann auch mehrere erste Leuchtdiodenmodule umfassen, wobei die wenigstens eine Leiterschleife (erste Leiterschleife) der Sicherheitszeichenleuchte dann zwischen den mehreren ersten Leuchtdiodenmodulen angeordnet sein kann. Die Ausführungen bezüglich der wenigstens einen Leiterschleife (erste Leiterschleife) der Sicherheitszeichenleuchte und einem ersten Leuchtdiodenmodul gelten in entsprechender Weise auch für eine so angeordnete Leiterschleife und mehrere erste Leuchtdiodenmodule.

Die Mehrzahl von Leuchtdioden ist vorzugsweise derart angeordnet, dass der Sicherheitszeichenabschnitt gleichmäßig beleuchtet bzw. ausgeleuchtet wird.

Das erste Leuchtdiodenmodul kann die wenigstens eine Leiterschleife (erste Leiterschleife) der Sicherheitszeichenleuchte umfassen. In diesem Fall kann die wenigstens eine Leiterschleife des ersten Leuchtdiodenmoduls auf einer Leiterplatte des ersten Leuchtdiodenmoduls angeordnet sein, auf der die wenigstens eine Leuchtdiode des ersten Leuchtdiodenmoduls angeordnet ist. Die wenigstens eine Leiterschleife kann auf der Seite der Leiterplatte angeordnet sein, auf der die wenigstens eine Leuchtdiode angeordnet ist. Diese Seite ist der Lichtabgabefläche des ersten Leuchtdiodenmoduls zugewandt. Die wenigstens eine Leiterschleife kann auf der Leiterplatte aufgedruckt ("aufgeprintet") oder in der Leiterplatte integriert, optional vergossen, sein.

Für den Fall, dass das zweite Leuchtdiodenmodul die wenigstens eine Leiterschleife (zweite Leiterschleife) zur elektrischen Versorgung des zweiten Leuchtdiodenmoduls umfasst, kann die wenigstens eine Leiterschleife des zweiten Leuchtendiodenmoduls zumindest teilweise in dem zweiten Leuchtdiodenmodul angeordnet sein. Die wenigstens eine Leiterschleife des zweiten Leuchtdiodenmoduls kann in dem zweiten Leuchtdiodenmodul integriert, optional vergossen sein.

Die wenigstens eine Leiterschleife (zweite Leiterschleife) zur elektrischen Versorgung des zweiten Leuchtdiodenmoduls kann auf einer Leiterplatte des zweiten Leuchtdiodenmoduls angeordnet sein, auf der die wenigstens eine Leuchtdiode des zweiten Leuchtdiodenmoduls angeordnet ist. Auf einer ersten Seite der Leiterplatte kann die wenigstens eine Leuchtdiode des zweiten Leuchtdiodenmoduls angeordnet sein. Die wenigstens eine Leiterschleife des zweiten Leuchtdiodenmoduls kann auf einer zweiten Seite der Leiterplatte angeordnet sein, die der ersten Seite der Leiterplatte abgewandt ist. Die zweite Seite der Leiterplatte ist der Lichtabgabefläche des zweiten Leuchtdiodenmoduls abgewandt, aber der zweiten Seitenfläche des Sicherheitszeichenabschnitts zugewandt, wenn das zweite Leuchtdiodenmodul an der zweiten Seitenfläche angeordnet ist. Die wenigstens eine Leiterschleife des zweiten Leuchtdiodenmoduls kann auf der Leiterplatte aufgedruckt ("aufgeprintet") oder in der Leiterplatte integriert, optional vergossen, sein.

Der Sicherheitszeichenabschnitt kann an einem Gehäuse der Sicherheitszeichenleuchte, das das erste Leuchtdiodenmodul und die wenigstens eine Leiterschleife (erste Leiterschleife) der Sicherheitszeichenleuchte umfasst, derart angeordnet sein, dass die Lichtabgabefläche des Gehäuses mit der ersten Seitenfläche des Sicherheitszeichenabschnitts in Kontakt oder zumindest teilweise in Kontakt ist. Das erste Leuchtdiodenmodul, insbesondere die wenigstens eine Leuchtdiode des ersten Leuchtdiodenmoduls, ist dazu eingerichtet, Licht über die Lichtabgabefläche des Gehäuses nach außerhalb des Gehäuses abzugeben, wobei das abgegebene Licht über die erste Seitenfläche des Sicherheitszeichenabschnitts in den Sicherheitszeichenabschnitt eingekoppelt wird.

Die Lichtabgabefläche des Gehäuses und die erste Seitenfläche des Sicherheitszeichenabschnitts können die gleiche Fläche und Form aufweisen. Der Sicherheitszeichenabschnitt kann an dem Gehäuse derart angeordnet, insbesondere befestigt, sein, dass die Lichtabgabefläche des Gehäuses und die erste Seitenfläche des Sicherheitszeichenabschnitts übereinstimmend und parallel zueinander angeordnet sind. Der Sicherheitszeichenabschnitt kann an dem Gehäuse auf jede bekannte Art befestigt sein.

Die Sicherheitszeichenleuchte kann als wenigstens eine Leiterschleife (erste Leiterschleife) eine Spule umfassen, die mit der wenigstens einen Leiterschleife (zweite Leiterschleife) zur elektrischen Versorgung des zweiten Leuchtdiodenmoduls induktiv koppelbar ist. Die wenigstens eine Leiterschleife (zweite Leiterschleife) zur elektrischen Versorgung des zweiten Leuchtdiodenmoduls kann einer Spule entsprechen, die mit der wenigstens einen Leiterschleife (erste Leiterschleife) der Sicherheitszeichenleuchte induktiv koppelbar ist.

Der Sicherheitszeichenabschnitt kann zumindest teilweise transparent und/oder zumindest teilweise transluzent sein. Das Sicherheitszeichen ist in einem transparenten und/oder transluzenten Bereich der wenigstens einen Oberfläche des Sicherheitszeichenabschnitts angeordnet. Der Sicherheitszeichenabschnitt kann transparent oder transluzent sein. Der Sicherheitszeichenabschnitt kann lichtdurchlässig sein, wobei der Sicherheitszeichenabschnitt zumindest einen transparenten Bereich umfasst und der restliche Sicherheitszeichenabschnitt transluzent ist.

Der Sicherheitszeichenabschnitt kann eine lichtdurchlässige Scheibe umfassen oder einer solchen entsprechen. Wenigstens eine Oberfläche der lichtdurchlässigen Scheibe umfasst das Sicherheitszeichen. Die lichtdurchlässige Scheibe kann transparent oder transluzent sein. Alternativ kann die lichtdurchlässige Scheibe zumindest einen transparenten Bereich umfassen, wobei die restliche Scheibe transluzent ist. Die Sicherheitszeichenleuchte kann auch als Scheibenleuchte bezeichnet werden.

Die lichtdurchlässige Scheibe kann aus einem lichtdurchlässigen Kunststoff, optional Acrylglas; einem lichtdurchlässigen Glas; und/oder einem lichtdurchlässigen Sicherheitsglas hergestellt sein. Der lichtdurchlässige Kunststoff, das lichtdurchlässige Glas und das lichtdurchlässige Sicherheitsglas kann transparent oder transluzent sein. Ein Beispiel für transluzentes Glas ist Milchglas bzw. undurchsichtiges Glas. Die Begriffe "Platte" und "Scheibe" können synonym verwendet werden und bezeichnen ein flächig ausgedehntes Element. Der Sicherheitszeichenabschnitt kann eine lichtdurchlässige Platte sein.

Der Sicherheitszeichenabschnitt kann rahmenlos ausgestaltet sein.

Die Sicherheitszeichenleuchte kann eine Steuerung umfassen. Die Steuerung kann dazu eingerichtet sein, das erste Leuchtdiodenmodul und das zweite Leuchtdiodenmodul, wenn das zweite Leuchtdiodenmodul an der zweiten Seitenfläche des Sicherheitszeichenabschnitts angeordnet ist, derart zu steuern, dass
- in einem Normalbetrieb nur das erste Leuchtdiodenmodul zur Beleuchtung des Sicherheitszeichenabschnitts eingeschaltet ist, und
- in einem Notfallbetrieb das erste Leuchtdiodenmodul zur Beleuchtung des Sicherheitszeichenabschnitts und das zweite Leuchtdiodenmodul zur Beleuchtung der Umgebung der Sicherheitszeichenleuchte eingeschaltet sind.

Folglich kann eine Blendwirkung durch das zweite Leuchtdiodenmodul im Normalbetrieb vermieden werden, da im Normalbetrieb vorzugsweise das zweite Leuchtdiodenmodul ausgeschaltet ist. In einem Normalbetrieb ist Netzspannung vorhanden, sodass die Sicherheitszeichenleuchte durch das Stromnetz versorgt werden kann. Der Normalbetrieb kann auch als Netzbetrieb bezeichnet werden. In einem Notfallbetrieb ist die normale Beleuchtung gestört. Zum Beispiel kann dies durch einen Ausfall des Stromnetzes oder eine lokale Unterbrechung der elektrischen Versorgung durch das Stromnetz aufgrund eines Brands oder elektrischen Defekts in einem Bereich, z.B. Gebäude, verursacht sein. Der Notfallbetrieb kann auch als Notbetrieb bezeichnet werden.

Ein Gehäuse der Sicherheitszeichenleuchte kann die Steuerung der Sicherheitszeichenleuchte umfassen.

Die Steuerung kann dazu eingerichtet sein, die Lichtabgabe des ersten Leuchtdiodenmodul durch Steuern, insbesondere Einstellen oder Ändern, der dem ersten Leuchtdiodenmodul, insbesondere der wenigstens einen Leuchtdiode des ersten Leuchtdiodenmoduls, zugeführten elektrischen Energie zu steuern. Die Steuerung kann dazu eingerichtet sein, die Lichtabgabe des zweiten Leuchtdiodenmodul, wenn das zweite Leuchtdiodenmodul an der zweiten Seitenfläche des Sicherheitszeichenabschnitts angeordnet ist, durch Steuern, insbesondere Einstellen oder Ändern, der dem zweiten Leuchtdiodenmodul, insbesondere der wenigstens einen Leuchtdiode des zweiten Leuchtdiodenmoduls, zugeführten elektrischen Energie zu steuern. Diese elektrische Energie entspricht der elektrischen Energie, die ausgehend von der wenigstens einen im Bereich des ersten Leuchtdiodenmoduls angeordneten Leiterschleife (erste Leiterschleife) der Sicherheitszeichenleuchte an die wenigstens eine Leiterschleife (zweite Leiterschleife) zur elektrischen Versorgung des zweiten Leuchtdiodenmoduls drahtlos übertragbar ist.

Die Steuerung kann dazu eingerichtet sein, das erste Leuchtdiodenmodul derart zu steuern, dass in einem Notfallbetrieb die wenigstens eine Leuchtdiode des ersten Leuchtdiodenmoduls gedimmtes Licht im Vergleich zur Lichtabgabe im Normalbetrieb abgibt.

Optional kann die Steuerung dazu eingerichtet sein, das erste Leuchtdiodenmodul und optional das zweite Leuchtdiodenmodul gemäß dem Industriestandard DIN 4844 zu steuern. Insbesondere kann die Steuerung dazu eingerichtet sein, das erste Leuchtdiodenmodul derart zu steuern, dass in einem Normalbetrieb die wenigstens eine Leuchtdiode des ersten Leuchtdiodenmoduls bei 100% betrieben wird und folglich die Lichtabgabe einem Dimmlevel von 100% entspricht (ungedimmter Zustand). Ferner kann die Steuerung dazu eingerichtet sein, das erste Leuchtdiodenmodul derart zu steuern, dass in einem Notfallbetrieb die wenigstens eine Leuchtdiode des ersten Leuchtdiodenmoduls bei 10% betrieben wird und folglich die Lichtabgabe einem Dimmlevel von 10% entspricht (gedimmter Zustand).

Die Steuerung kann ein Prozessor, ein Mikroprozessor, ein Controller, ein Mikrocontroller, eine anwendungsspezifische integrierte Schaltung (ASIC), ein FPGA ("Field Programmable Gate Array") oder irgendeine Kombination der vorgenannten Elemente sein. Die Steuerung kann optional ein Bestandteil des ersten Leuchtdiodenmoduls sein.

Die Sicherheitszeichenleuchte kann eine elektrische Energieversorgung zur elektrischen Versorgung der wenigstens einen Leuchtdiode des ersten Leuchtdiodenmoduls umfassen. Ein Gehäuse der Sicherheitszeichenleuchte kann die elektrische Energieversorgung der Sicherheitszeichenleuchte umfassen. Diese elektrische Energieversorgung ist zumindest teilweise im Bereich des erste Leuchtdiodenmoduls angeordnet. Optional kann zumindest ein Teil dieser elektrischen Energieversorgung ein Bestandteil des ersten Leuchtdiodenmoduls sein. Die elektrische Energieversorgung kann wenigstens einen elektrischen Energiespeicher, zum Beispiel eine Batterie bzw. einen Akkumulator (Akku), wenigstens ein Netzteil und/oder wenigstens ein Betriebsgerät zum Betreiben einer Lichtquelle, insbesondere der wenigstens eine Leuchtdiode des ersten Leuchtdiodenmoduls, umfassen. Der wenigstens eine elektrische Energiespeicher kann wiederaufladbar sein.

Die elektrische Energieversorgung ist dazu eingerichtet, zumindest die wenigstens eine Leuchtdiode des ersten Leuchtdiodenmoduls elektrisch zu versorgen. Die elektrische Energieversorgung kann dazu eingerichtet sein, das zweite Leuchtdiodenmodul, wenn das zweite Leuchtdiodenmodul an der zweiten Seitenfläche des Sicherheitszeichenabschnitts angeordnet ist, mit elektrischer Energie über eine induktive Kopplung zwischen der wenigstens einen Leiterschleife (ersten Leiterschleife) der Sicherheitszeichenleuchte und der wenigstens einen Leiterschleife (zweite Leiterschleife) zur elektrischen Versorgung des zweiten Leuchtdiodenmoduls drahtlos zu versorgen. Wie bereits vorstehend ausgeführt, kann die wenigstens eine Leiterschleife (zweite Leiterschleife) durch den Sicherheitszeichenabschnitt im Bereich der zweiten Seitenfläche umfasst sein (z.B. auf der zweiten Seitenfläche aufgedruckt ("aufgeprintet") oder im Sicherheitszeichenabschnitt integriert, optional vergossen) oder durch das zweite Leuchtdiodenmodul umfasst sein.

Die elektrische Energieversorgung kann wenigstens ein Betriebsgerät zum Bereitstellen von elektrischer Energie an die wenigstens eine Leuchtdiode des ersten Leuchtdiodenmoduls und wenigstens ein Betriebsgerät zum Bereitstellen von elektrischer Energie an die wenigstens eine Leuchtdiode des zweiten Leuchtdiodenmoduls umfassen. Die elektrische Energieversorgung kann wenigstens ein Betriebsgerät mit wenigstens zwei Ausgängen zum Bereitstellen von elektrischer Energie über einen ersten Ausgang der zwei Ausgänge an die wenigstens eine Leuchtdiode des ersten Leuchtdiodenmoduls und elektrischer Energie über einen zweiten Ausgang der zwei Ausgänge an die wenigstens eine Leuchtdiode des zweien Leuchtdiodenmoduls umfassen. Der Begriff "Kanal" oder "Ausgangskanal" kann für den Begriff "Ausgang" synonym verwendet werden.

Die wenigstens eine Leiterschleife (erste Leiterschleife) der Sicherheitszeichenleuchte kann mit der elektrische Energieversorgung der Sicherheitszeichenleuchte elektrische verbunden sein oder die wenigstens eine Leiterschleife (erste Leiterschleife) kann ein Bestandteil der elektrischen Energieversorgung sein. Folglich kann das zweite Leuchtdiodenmodul mit elektrischer Energie ausgehend von der der elektrische Energieversorgung der Sicherheitszeichenleuchte mittels einer induktiven Übertragung der elektrischen Energie von der wenigstens einen Leiterschleife (erste Leiterschleife) der Sicherheitszeichenleuchte zur wenigstens einen Leiterschleif (zweite Leiterschleife) zur elektrischen Versorgung des zweiten Leuchtdiodenmoduls elektrisch versorgt werden, wenn das zweite Leuchtdiodenmodul an der zweiten Seitenfläche des Sicherheitszeichenabschnitts angeordnet ist. Die wenigstens eine Leiterschleife (erste Leiterschleife) der Sicherheitszeichenleuchte kann mit dem optionalen Betriebsgerät zum Bereitstellen von elektrischer Energie an die wenigstens einen Leuchtdiode des zweiten Leuchtdiodenmoduls elektrisch verbunden sein. Die wenigstens eine Leiterschleife erste Leiterschleife) der Sicherheitszeichenleuchte kann mit dem zweiten Ausgang des optionalen Betriebsgerät umfassend die wenigstens zwei Ausgänge verbunden sein.

Zur Steuerung der Lichtabgabe des ersten Leuchtdiodenmoduls kann die Steuerung der Sicherheitszeichenleuchte dazu eingerichtet sein, das optionale Betriebsgerät zum Bereitstellen von elektrischer Energie an die wenigstens eine Leuchtdiode des ersten Leuchtdiodenmodul zu steuern. Zur Steuerung der Lichtabgabe des ersten Leuchtdiodenmoduls kann die Steuerung dazu eingerichtet sein, die an dem ersten Ausgang des optionalen Betriebsgerät mit wenigstens zwei Ausgängen bereitgestellte elektrische Energie zu steuern. Zur Steuerung der Lichtabgabe des zweiten Leuchtdiodenmoduls kann die Steuerung dazu eingerichtet sein, das optionale Betriebsgerät zum Bereitstellen von elektrischer Energie an die wenigstens eine Leuchtdiode des zweiten Leuchtdiodenmodul zu steuern. Zur Steuerung der Lichtabgabe des zweiten Leuchtdiodenmoduls kann die Steuerung dazu eingerichtet sein, die an dem zweiten Ausgang des optionalen Betriebsgeräts mit wenigstens zwei Ausgängen bereitgestellte elektrische Energie zu steuern.

Optional umfasst das zweite Leuchtdiodenmodul für die wenigstens eine Leuchtdiode des zweiten Leuchtdiodenmoduls eine Fresnel-Linsenanordnung. Die Fresnel-Linsenanordnung ist zur Einstellung der Abstrahlrichtung des durch die wenigstens eine Leuchtdiode des zweiten Leuchtdiodenmoduls abgebbaren Lichts drehbar angeordnet.

Die Fresnel-Linsenanordnung kann auf einer Lichtabgabefläche des zweiten Leuchtdiodenmoduls angeordnet sein oder ein Bestandteil der Lichtabgabefläche sein, wobei die wenigstens eine Leuchtdiode des zweiten Leuchtdiodenmoduls dazu eingerichtet ist, Licht über die Fresnel-Linsenanordnung nach außerhalb des zweiten Leuchtdiodenmoduls abzugeben.

Falls das zweite Leuchtdiodenmodul eine Mehrzahl von Leuchtdioden (d.h. zwei oder mehr Leuchtdioden) umfasst, dann kann das zweite Leuchtdiodenmodul für zumindest zwei, optional jede, der Mehrzahl von Leuchtdioden eine entsprechende Fresnel-Linsenanordnung umfassen. Die Beschreibung bzgl. der Fresnel-Linsenanordnung für die wenigstens eine Leuchtdiode ist dann entsprechend für jede Fresnel-Linsenanordnung zutreffend.

Die Fresnel-Linsenanordnung kann derart eingerichtet sein, dass sie
- in einer ersten Drehposition das durch die wenigstens eine Leuchtdiode des zweiten Leuchtdiodenmoduls abgegebene Licht in eine Richtung orthogonal zur Ebene einer Lichtabgabefläche des zweiten Leuchtdiodenmoduls leitet, und
- in einer zweiten Drehposition das durch die wenigstens eine Leuchtdiode des zweiten Leuchtdiodenmoduls abgegebene Licht in eine Richtung parallel zur Ebene der Lichtabgabefläche des zweiten Leuchtdiodenmoduls leitet.

Die Sicherheitszeichenleuchte ist insbesondere dazu eingerichtet, an einer Wand oder einer Decke eines Raums befestigt zu werden, wobei die wenigstens eine Leuchtdiode des zweites Leuchtdiodenmodul dazu eingerichtet ist, Licht in Richtung eines Bodens des Raums abzugeben, wenn die Sicherheitsleuchte an der Wand oder der Decke befestigt ist und das zweite Leuchtdiodenmodul an der zweiten Seitenfläche des Sicherheitszeichenabschnitts angeordnet ist.

Der Sicherheitszeichenabschnitt kann an der zweiten Seitenfläche eine mit einer ersten Verbindungsvorrichtung des zweiten Leuchtdiodenmoduls in Eingriff bringbare zweite Verbindungsvorrichtung umfassen. Optional ist die erste Verbindungsvorrichtung mit der zweiten Verbindungsvorrichtung in Eingriff gebracht.

Das zweite Leuchtdiodenmodul kann mit dem Sicherheitszeichenabschnitt lösbar verbunden sein. Das zweite Leuchtdiodenmodul kann dazu eingerichtet sein, mit dem Sicherheitszeichenabschnitt lösbar verbunden zu werden. Die erste und zweite Verbindungsvorrichtung können dazu eingerichtet sein, miteinander kraft- und oder formschlüssig verbunden zu werden, um das zweite Leuchtdiodenmodul an der zweiten Seitenfläche des Sicherheitszeichenabschnitts zu befestigen.

Die erste und zweite Verbindungsvorrichtung können jeweils eine Einrastvorrichtung, eine Einschnappvorrichtung oder eine Festhakvorrichtung sein. Die erste Verbindungsvorrichtung kann durch eine Formgebung des zweiten Leuchtdiodenmoduls ausgebildet sein. Die zweite Verbindungsvorrichtung kann durch eine Formgebung der zweiten Seitenfläche des Sicherheitszeichenabschnitts ausgebildet sein. Die erste und zweite Verbindungsvorrichtung können jeweils für eine Klickverbindung, Einrastverbindung, Schiebeverbindung, Einschraubverbindung, eine Einsteckverbindung oder jede andere bekannte Verbindungsart eingerichtet sein, um miteinander verbunden zu werden. Durch die vorstehend beschriebenen Verbindungen kann ein sicherer Halt des zweite Leuchtdiodenmoduls an der zweiten Seitenfläche des Sicherheitszeichenabschnitts gewährleistet werden.

Die zweite Seitenfläche des Sicherheitszeichenabschnitts kann eine Ausnehmung aufweisen, in der das zweite Leuchtdiodenmodul zumindest teilweise anordenbar ist. Der Sicherheitszeichenabschnitt kann die wenigstens eine Leiterschleife (zweite Leiterschleife) zur elektrischen Versorgung des zweiten Leuchtdiodenmoduls in dem Bereich dieser Ausnehmung umfassen. Zum Beispiel kann die wenigstens eine Leiterschleife im Bereich dieser Ausnehmung auf der zweiten Seitenfläche des Sicherheitszeichenabschnitts aufgedruckt ("aufgeprintet") sein oder im Bereich dieser Ausnehmung im Sicherheitszeichenabschnitt integriert, optional vergossen sein. Alternativ kann das zweite Leuchtdiodenmodul die wenigstens eine Leiterschleife (zweite Leiterschleife) zur elektrischen Versorgung des zweiten Leuchtdiodenmoduls umfassen.

Das zweite Leuchtdiodenmodul kann an der zweiten Seitenfläche in dem Sicherheitszeichenabschnitt integriert sein. Optional ist das zweite Leuchtdiodenmodul an der zweiten Seitenfläche in dem Sicherheitszeichenabschnitt vergossen.

Um die erfindungsgemäße Sicherheitszeichenleuchte zu erreichen können die vorstehenden optionalen Merkmale und Ausführungsformen miteinander beliebig kombiniert werden.

Gemäß einem weiteren Aspekt der vorliegenden Erfindung wird ein System mit einem Leuchtdiodenmodul und einer Sicherheitszeichenleuchte gemäß dem vorstehend beschriebenen Aspekt der vorliegenden Erfindung bereitgestellt. Das Leuchtdiodenmodul umfasst wenigstens eine Leuchtdiode und wenigstens eine Leiterschleife zur elektrischen Versorgung der wenigstens einen Leuchtdiode. Das Leuchtdiodenmodul ist dazu eingerichtet, derart an der zweiten Seitenfläche des Sicherheitszeichenabschnitts der Sicherheitszeichenleuchte angeordnet zu werden, dass
- die wenigstens eine Leuchtdiode des Leuchtdiodenmoduls zur Beleuchtung der Umgebung der Sicherheitszeichenleuchte eingerichtet ist, und
- die wenigstens eine Leiterschleife der Sicherheitszeichenleuchte zur induktiven Übertragung elektrischer Energie an die wenigstens eine Leiterschleife des Leuchtdiodenmoduls eingerichtet ist,
wenn das Leuchtdiodenmodul an der zweiten Seitenfläche des Sicherheitszeichenabschnitts angeordnet ist.

Die vorstehende Beschreibung der Sicherheitszeichenleuchte gemäß einem Aspekt der Erfindung ist für das System mit dem Leuchtdiodenmodul gemäß einem weiteren Aspekt der vorliegenden Erfindung entsprechend zutreffend. Insbesondere ist die vorstehende Beschreibung des zweiten Leuchtdiodenmoduls für das Leuchtdiodenmodul gemäß dem weiteren Aspekt der vorliegenden Erfindung entsprechend zutreffend.

Das erfindungsgemäß System mit dem Leuchtdiodenmodul erreicht die gleichen Vorteile wie die erfindungsgemäße Sicherheitszeichenleuchte.

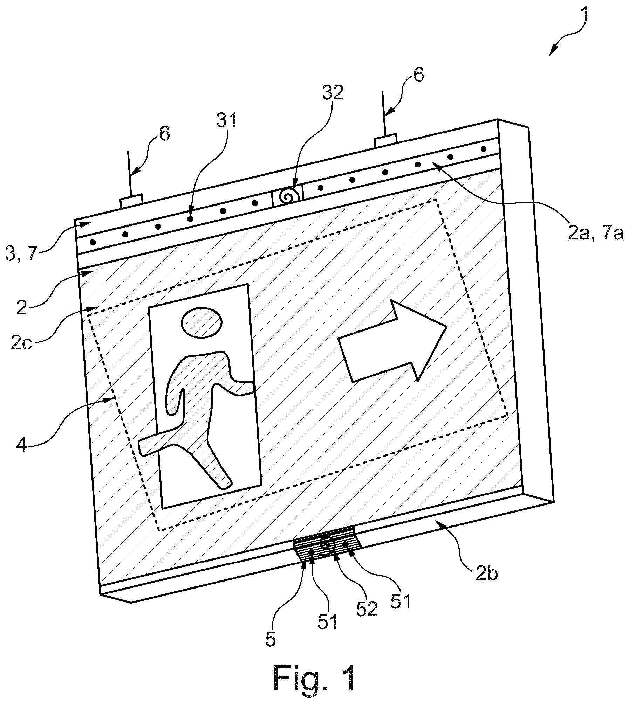

Nachfolgend wird eine detaillierte Beschreibung der Figur 1 gegeben.

Figur 1 zeigt ein Beispiel einer schematischen Seitenansicht einer bevorzugten Ausführungsform einer Sicherheitszeichenleuchte gemäß einem Aspekt der vorliegenden Erfindung.

Die Proportionen und Ausmaße der in Figur 1 gezeigten Elemente stellen die Sicherheitszeichenleuchte nicht maßstabsgetreu dar, sondern sind lediglich so gewählt, um den Aufbau und die Funktion der Sicherheitszeichenleuchte beschreiben zu können.

Die vorstehende Beschreibung der Sicherheitszeichenleuchte gemäß einem Aspekt der vorliegenden Erfindung ist für die Sicherheitszeichenleuchte 1 der Figur 1 entsprechend zutreffend.

Die Sicherheitszeichenleuchte 1 der Figur 1 umfasst einen zumindest teilweise lichtdurchlässigen Sicherheitszeichenabschnitt 2 mit zwei voneinander abgewandten Oberflächen, die durch wenigstens zwei Seitenflächen 2a, 2b miteinander verbunden sind. Wenigstens eine Oberfläche 2c der zwei voneinander abgewandten Oberflächen umfasst ein Sicherheitszeichen 4. Gemäß der Figur 1 entspricht der Sicherheitszeichenabschnitt 2 einer rechteckförmigen Platte bzw. Scheibe. Diese ist vorzugsweise lichtdurchlässig.

Die Sicherheitszeichenleuchte 1 umfasst ferner ein erstes Leuchtdiodenmodul 3, das wenigstens eine Leuchtdiode 31 zur Beleuchtung des Sicherheitszeichenabschnitts 2 umfasst. Die Sicherheitszeichenleuchte 1 kann auch mehr als nur ein erstes Leuchtdiodenmodul 3 umfassen, wie vorstehend beschrieben. In diesem Fall ist die Beschreibung bezüglich eines ersten Leuchtdiodenmoduls für die mehreren ersten Leuchtdiodenmodule entsprechend zutreffend. Gemäß der Figur 1 umfasst das erste Leuchtdiodenmodul 3 dreizehn Leuchtdioden 31. Diese Anzahl ist lediglich beispielhaft und nicht einschränkend für die vorliegende Erfindung. Folglich kann das erste Leuchtdiodenmodul 3 eine oder mehrere Leuchtdioden 31 umfassen. Die Sicherheitszeichenleuchte 1 umfasst wenigstens eine Leiterschleife 32. Gemäß der Ausführungsform der Figur 1, umfasst das erste Leuchtdiodenmodul 3 die wenigstens eine Leiterschleife 32 der Sicherheitszeichenleuchte 1. Dies ist nicht beschränkend für die vorliegende Erfindung. Die wenigstens eine Leiterschleife 32 kann auch außerhalb des ersten Leuchtdiodenmoduls 3 im Bereich des ersten Leuchtdiodenmoduls 3 angeordnet sein. Zum Beispiel kann die wenigstens eine Leiterschleife 32 an einer Lichtabgabefläche oder einer anderen Seite des ersten Leuchtdiodenmoduls 3 angeordnet sein. Die wenigstens eine Leiterschleife 32 kann zwischen zwei ersten Leuchtdiodenmodulen 3 angeordnet sein, wenn die Sicherheitszeichenleuchte zwei oder mehr erste Leuchtdiodenmodule 3 umfasst. Wie in Figur 1 gezeigt, kann die wenigstens eine Leiterschleife 32 des ersten Leuchtdiodenmoduls 3 zwischen zwei Leuchtdioden 31 des ersten Leuchtdiodenmoduls 3 angeordnet sein. Ein Gehäuse 7 der Sicherheitszeichenleuchte 1 umfasst das erste Leuchtdiodenmodul 3 und die wenigstens eine Leiterschleife 32.

Wie in Figur 1 gezeigt, kann die Sicherheitszeichenleuchte 1, insbesondere das Gehäuse 7 der Sicherheitszeichenleuchte 1, durch zwei Befestigungselemente 6 an der Decke eines Raums befestigt werden. Diese Anzahl ist lediglich beispielhaft und nicht einschränkend für die vorliegende Erfindung. Folglich kann die Sicherheitszeichenleuchte 1 durch ein oder mehrere Befestigungselemente 6 an der Decke befestigt werden. Die Befestigungselemente 6 können auf jeder bekannten Art ausgestaltet sein. Eine elektrische Versorgung der Sicherheitszeichenleuchte 1, insbesondere des ersten Leuchtdiodenmoduls 3, kann ausgehend von einem elektrischen Versorgungsanschluss der Decke durch wenigstens ein Element der Befestigungselemente 6 erfolgen, wenn die Sicherheitszeichenleuchte 1 durch die Befestigungselemente 6 an der Decke befestigt ist. Hierfür, kann das wenigstens eine Elemente eine oder mehrere Stromleitungen umfassen.

Der Sicherheitszeichenabschnitt 2 ist bezüglich des ersten Leuchtdiodenmoduls 3 derart angeordnet, dass das erste Leuchtdiodenmodul 3 dazu eingerichtet ist, Licht über eine erste Seitenfläche 2a der wenigstens zwei Seitenflächen 2a, 2b des Sicherheitszeichenabschnitts 2 in den Sicherheitszeichenabschnitt 2 einzukoppeln. Insbesondere ist der Sicherheitszeichenabschnitt 2 an dem Gehäuse 7 derart angeordnet, dass das erste Leuchtdiodenmodul 3 dazu eingerichtet ist, Licht über die erste Seitenfläche 2a des Sicherheitszeichenabschnitts 2 in den Sicherheitszeichenabschnitt 2 einzukoppeln. Der Sicherheitszeichenabschnitt 2 ist derart ausgestaltet, dass das über die erste Seitenfläche 2a in den Sicherheitszeichenabschnitt 2 eingekoppelte Licht das Sicherheitszeichen 4 beleuchtet.

Wie in Figur 1 gezeigt, kann der Sicherheitszeichenabschnitt 2 derart angeordnet sein, dass eine Lichtabgabefläche 7a (durch die die Leuchtdioden 31 Licht abgeben) des Gehäuses 7 der Sicherheitszeichenleuchte 1 mit der ersten Seitenfläche 2a des Sicherheitszeichenabschnitts 2 in Kontakt ist. Alternativ kann der Sicherheitszeichenabschnitt 2 derart angeordnet sein, dass die Lichtabgabefläche 7a des Gehäuses 7 mit der ersten Seitenfläche 2a des Sicherheitszeichenabschnitts 2 zumindest teilweise in Kontakt ist. Optional kann der Sicherheitszeichenabschnitt 2 derart angeordnet sein, dass die ersten Seitenfläche 2a des Sicherheitszeichenabschnitts 2 zu der Lichtabgabefläche 7a des Gehäuses 7 beabstandet angeordnet ist (in Figur 1 nicht gezeigt).

Der Sicherheitszeichenabschnitt 2, insbesondere die erste Seitenfläche 2a des Sicherheitszeichenabschnitts 2, kann auf jede bekannte Art an dem Gehäuse 7 der Sicherheitszeichenleuchte 1 (optional lösbar) befestigt sein.

Eine zweite Seitenfläche 2b der wenigstens zwei Seitenflächen 2a, 2b des Sicherheitszeichenabschnitts 2 ist derart ausgelegt, dass ein zweites Leuchtdiodenmodul 5 an der zweiten Seitenfläche 2b des Sicherheitszeichenabschnitts 2 anordenbar ist. Gemäß der Figur 1 ist das zweite Leuchtdiodenmodul 5 an der zweiten Seitenfläche 2b des Sicherheitszeichenabschnitts 2 angeordnet, insbesondere mit dem Sicherheitszeichenabschnitt 2 verbunden bzw. an diesem befestigt. Diese Verbindung bzw. Befestigung ist optional lösbar.

Das zweite Leuchtdiodenmodul 5 umfasst zwei Leuchtdioden 51 und wenigstens eine Leiterschleife 52 zur elektrischen Versorgung des zweiten Leuchtdiodenmoduls 5, insbesondere der zwei Leuchtdioden 51. Diese Anzahl an Leuchtdioden ist lediglich beispielhaft und nicht einschränkend für die vorliegende Erfindung. Folglich kann das zweite Leuchtdiodenmodul 5 eine oder mehrere Leuchtdioden 51 (d.h. wenigstens eine Leuchtdiode) umfassen. Die zwei Leuchtdioden 51 des zweiten Leuchtdiodenmoduls 5 sind zur Beleuchtung der Umgebung der Sicherheitszeichenleuchte 1 eingerichtet, wenn das zweite Leuchtdiodenmodul 5 an der zweiten Seitenfläche 2b des Sicherheitszeichenabschnitts 2 angeordnet ist. Alternativ kann die wenigstens eine Leiterschleife 51 kein Bestandteil des zweiten Leuchtdiodenmoduls 5 sein. **In** diesem Fall kann der Sicherheitszeichenabschnitt 2 im Bereich der zweiten Seitenfläche 2b die wenigstens eine Leiterschleife 51 umfassen. Hierbei ist dann die wenigstens eine Leiterschleife 52 derart im Bereich der zweiten Seitenfläche 2b des Sicherheitszeichenabschnitts 2 angeordnet, dass das zweite Leuchtdiodenmodul 5 mit der wenigstens einen Leiterschleife 52 elektrisch kontaktiert bzw. verbunden ist, wenn das zweite Leuchtdiodenmodul 5 an der zweiten Seitenfläche 2b des Sicherheitszeichenabschnitts 2 angeordnet ist.

Die Sicherheitszeichenleuchte 1 ist dazu eingerichtet, das zweite Leuchtdiodenmodul 5 mit elektrischer Energie mittels einer induktiven Übertragung der elektrischen Energie ausgehend von der wenigstens einen Leiterschleife 32 der Sicherheitszeichenleuchte 1 an die wenigstens einen Leiterschleife 52 zur elektrischen Versorgung des zweiten Leuchtdiodenmoduls 5 elektrisch zu versorgen, wenn das zweite Leuchtdiodenmodul 5 an der zweiten Seitenfläche 2b des Sicherheitszeichenabschnitts 2 angeordnet ist.

Das Gehäuse 7 umfasst ferner die elektrischen Komponenten zur elektrischen Versorgung des ersten Leuchtdiodenmoduls 3 und zur elektrischen Versorgung des zweiten Leuchtdiodenmoduls 5 mittels der drahtlosen Übertragung von elektrischer Energie von der wenigstens einen Leiterschleife 31 der Sicherheitszeichenleuchte 1 an die wenigstens eine Leiterschleife 52 zur elektrischen Versorgung des zweiten Leuchtdiodenmoduls 5.

Der Sicherheitszeichenabschnitt 2, das Gehäuse 7 und das zweite Leuchtdiodenmodul 5 können die Sicherheitszeichenleuchte 1 bilden. Mit anderen Worten der Sicherheitszeichenabschnitt 2, das Gehäuse 7 und das zweite Leuchtdiodenmodul 5 sind dazu eingerichtet, miteinander verbunden zu werden, um die Sicherheitszeichenleuchte 1 zu bilden. Diese Verbindung kann lösbar sein.

Für eine weitere Beschreibung der in Figur 1 gezeigten Komponenten wird auf die vorstehende Beschreibung der Sicherheitszeichenleuchte gemäß einem Aspekt der vorliegenden Erfindung sowie die vorstehende Beschreibung des Leuchtdiodenmoduls gemäß einem weiteren Aspekt der vorliegenden Erfindung verwiesen.

## Patentansprüche

1. Sicherheitszeichenleuchte (1), umfassend
- einen zumindest teilweise lichtdurchlässigen Sicherheitszeichenabschnitt (2) mit zwei voneinander abgewandten Oberflächen, die durch wenigstens zwei Seitenflächen (2a, 2b) miteinander verbunden sind, wobei wenigstens eine Oberfläche (2c) der zwei voneinander abgewandten Oberflächen ein Sicherheitszeichen (4) umfasst, und
- wenigstens ein erstes Leuchtdiodenmodul (3) umfassend wenigstens eine Leuchtdiode (31) zur Beleuchtung des Sicherheitszeichenabschnitts (2); wobei
- der Sicherheitszeichenabschnitt (2) bezüglich des wenigstens einen ersten Leuchtdiodenmoduls (3) derart angeordnet ist, dass das wenigstens eine erste Leuchtdiodenmodul (3) dazu eingerichtet ist, Licht über eine erste Seitenfläche (2a) der wenigstens zwei Seitenflächen (2a, 2b) des Sicherheitszeichenabschnitts (2) in den Sicherheitszeichenabschnitt (2) einzukoppeln;
- eine zweite Seitenfläche (2b) der wenigstens zwei Seitenflächen (2a, 2b) des Sicherheitszeichenabschnitts (2) derart ausgelegt ist, dass ein zweites Leuchtdiodenmodul (5) an der zweiten Seitenfläche (2b) des Sicherheitszeichenabschnitts (2) anordenbar ist, wobei das zweite Leuchtdiodenmodul (5) wenigstens eine Leuchtdiode (51) umfasst;
- wobei die Sicherheitszeichenleuchte (1) im Bereich des wenigstens einen ersten Leuchtdiodenmoduls (3) wenigstens eine Leiterschleife (32) umfasst; und
- die Sicherheitszeichenleuchte (1) dazu eingerichtet ist, das zweite Leuchtdiodenmodul (5) mit elektrischer Energie mittels einer induktiven Übertragung der elektrischen Energie ausgehend von der wenigstens einen Leiterschleife (32) der Sicherheitszeichenleuchte (1) an wenigstens eine Leiterschleife (52) zur elektrischen Versorgung des zweiten Leuchtdiodenmoduls (5) elektrisch zu versorgen, wenn das zweite Leuchtdiodenmodul (5) und die wenigstens eine Leiterschleife (52) zur elektrischen Versorgung des zweiten Leuchtdiodenmoduls (5) an der zweiten Seitenfläche (2b) des Sicherheitszeichenabschnitts (2) angeordnet sind.

2. Sicherheitszeichenleuchte (1) gemäß Anspruch 1, wobei das zweite Leuchtdiodenmodul (5) derart an der zweiten Seitenfläche (2b) des Sicherheitszeichenabschnitts (2) angeordnet ist, dass die wenigstens eine Leuchtdiode (51) des zweiten Leuchtdiodenmoduls (5) zur Beleuchtung einer Umgebung der Sicherheitszeichenleuchte (1) eingerichtet ist.

3. Sicherheitszeichenleuchte (1) gemäß Anspruch 1 oder 2, wobei
- das wenigstens eine erste Leuchtdiodenmodul (3) eine Mehrzahl von Leuchtdioden (31) zur Beleuchtung des Sicherheitszeichenabschnitts (2) umfasst, und die wenigstens eine Leiterschleife (32) der Sicherheitszeichenleuchte (1) zwischen zwei Leuchtdioden (31) der Mehrzahl von Leuchtdioden (31), optional mittig einer Lichtabgabefläche des wenigstens einen ersten Leuchtdiodenmoduls (3), angeordnet ist; oder
- die wenigstens eine Leiterschleife (32) der Sicherheitszeichenleuchte (1) zwischen mehreren ersten Leuchtdiodenmodulen (3) angeordnet ist.

4. Sicherheitszeichenleuchte (1) gemäß einem der vorgehenden Ansprüche, wobei der Sicherheitszeichenabschnitt (2) rahmenlos ausgestaltet ist.

5. Sicherheitszeichenleuchte (1) gemäß einem der vorgehenden Ansprüche umfassend eine Steuerung, die dazu eingerichtet ist, das wenigstens eine erste Leuchtdiodenmodul (3) und das zweite Leuchtdiodenmodul (5), wenn das zweite Leuchtdiodenmodul (5) an der zweiten Seitenfläche (2b) des Sicherheitszeichenabschnitts (2) angeordnet ist, derart zu steuern, dass
- in einem Normalbetrieb nur das wenigstens eine erste Leuchtdiodenmodul (3) zur Beleuchtung des Sicherheitszeichenabschnitts (2) eingeschaltet ist, und
- in einem Notfallbetrieb das wenigstens eine erste Leuchtdiodenmodul (3) zur Beleuchtung des Sicherheitszeichenabschnitts (2) und das zweite Leuchtdiodenmodul (5) zur Beleuchtung der Umgebung der Sicherheitszeichenleuchte (1) eingeschaltet sind.

6. Sicherheitszeichenleuchte (1) gemäß einem der vorhergehenden Ansprüche, wobei
- das zweite Leuchtdiodenmodul (5) für die wenigstens eine Leuchtdiode (31) des zweiten Leuchtdiodenmoduls (5) eine Fresnel-Linsenanordnung umfasst, die zur Einstellung der Abstrahlrichtung des durch die wenigstens eine Leuchtdiode (51) des zweiten Leuchtdiodenmoduls (5) abgebbaren Lichts drehbar angeordnet ist.

7. Sicherheitszeichenleuchte (1) gemäß Anspruch 6, wobei die Fresnel-Linsenanordnung derart eingerichtet ist, dass sie
- in einer ersten Drehposition das durch die wenigstens eine Leuchtdiode (51) des zweiten Leuchtdiodenmoduls (5) abgegebene Licht in eine Richtung orthogonal zur Ebene einer Lichtabgabefläche des zweiten Leuchtdiodenmoduls (5) leitet, und
- in einer zweiten Drehposition das durch die wenigstens eine Leuchtdiode (51) des zweiten Leuchtdiodenmoduls (5) abgegebene Licht in eine Richtung parallel zur Ebene der Lichtabgabefläche des zweiten Leuchtdiodenmoduls (5) leitet.

8. Sicherheitszeichenleuchte (1) gemäß einem der vorgehenden Ansprüche, wobei
- der Sicherheitszeichenabschnitt (2) an der zweiten Seitenfläche (2b) eine mit einer ersten Verbindungsvorrichtung des zweiten Leuchtdiodenmoduls (5) in Eingriff bringbare zweite Verbindungsvorrichtung umfasst, wobei optional die erste Verbindungsvorrichtung mit der zweiten Verbindungsvorrichtung in Eingriff gebracht ist.

9. Sicherheitszeichenleuchte (1) gemäß einem der Ansprüche 1 bis 7, wobei das zweite Leuchtdiodenmodul (5) an der zweiten Seitenfläche (2b) in dem Sicherheitszeichenabschnitt (2) integriert ist, optional vergossen ist.

10. System umfassend ein Leuchtdiodenmodul (5) und eine Sicherheitszeichenleuchte (1) gemäß einem der vorhergehenden Ansprüche, wobei
- das Leuchtdiodenmodul (5) wenigstens eine Leuchtdiode (51) und wenigstens eine Leiterschleife (52) zur elektrischen Versorgung der wenigstens einen Leuchtdiode (51) umfasst; und
- das Leuchtdiodenmodul (5) dazu eingerichtet ist, derart an der zweiten Seitenfläche (2b) des Sicherheitszeichenabschnitts (2) der Sicherheitszeichenleuchte (1) angeordnet zu werden, dass
- die wenigstens eine Leuchtdiode (51) des Leuchtdiodenmoduls (5) zur Beleuchtung der Umgebung der Sicherheitszeichenleuchte (1) eingerichtet ist, und
- die wenigstens eine Leiterschleife (32) der Sicherheitszeichenleuchte (1) zur induktiven Übertragung elektrischer Energie an die wenigstens eine Leiterschleife (52) des Leuchtdiodenmoduls (5) eingerichtet ist,
wenn das Leuchtdiodenmodul (5) an der zweiten Seitenfläche (2b) des Sicherheitszeichenabschnitts (2) angeordnet ist.

## Claims

1. Safety sign luminaire (1), comprising:
an at least partially light-transmissive safety sign portion (2) having two mutually opposite surfaces which are connected to one another by at least two side surfaces (2a, 2b), wherein at least one surface (2c) of the two mutually opposite surfaces comprises a safety sign (4); and
at least one first light-emitting diode module (3) comprising at least one light-emitting diode (31) for illuminating the safety sign portion (2),
wherein
the at least one first light-emitting diode module (3) is arranged such that at least one first light-emitting diode (31) is configured to couple light into the safety sign portion (2) via a first side surface (2a) of the at least two side surfaces (2a, 2b) of the safety sign portion (2), and
a second side surface (2b) of the at least two side surfaces (2a, 2b) of the safety sign portion (2) is configured such that a second light-emitting diode module (5) can be arranged on the second side surface (2b) of the safety sign portion (2), wherein the second light-emitting diode module (5) comprises at least one light-emitting diode (51),
wherein the safety sign luminaire (1) comprises, in the region of the at least one first light-emitting diode module (3), at least one conductor loop (32), and the safety sign luminaire (1) is configured to electrically supply the second light-emitting diode module (5) with electrical energy by inductive transfer of the electrical energy from the at least one conductor loop (32) of the safety sign luminaire (1) to at least one conductor loop (52) for electrically supplying the second light-emitting diode module (5), when the second light-emitting diode module (5) and the at least one conductor loop (52) for electrically supplying the second light-emitting diode module (5) are arranged on the second side surface (2b) of the safety sign portion (2).

2. Safety sign luminaire (1) according to claim 1, wherein the second light-emitting diode module (5) is arranged on the second side surface (2b) of the safety sign portion (2) such that the at least one light-emitting diode (51) of the second light-emitting diode module (5) is configured to illuminate an environment of the safety sign luminaire (1).

3. Safety sign luminaire (1) according to claim 1 or 2, wherein
the at least one first light-emitting diode module (3) comprises a plurality of light-emitting diodes (31) for illuminating the safety sign portion (2), and the at least one conductor loop (32) of the safety sign luminaire (1) is arranged between two light-emitting diodes (31), optionally centered of a light-emitting surface of the at least one first light-emitting diode module (3), or
the at least one conductor loop (32) of the safety sign luminaire (1) is arranged between a plurality of first light-emitting diode modules (3).

4. Safety sign luminaire (1) according to any one of the preceding claims, wherein the safety sign portion (2) is configured without a frame.

5. Safety sign luminaire (1) according to any one of the preceding claims, comprising a control unit which is configured to control the at least one first light-emitting diode module (3) and the second light-emitting diode module (5), when the second light-emitting diode module (5) is arranged on the second side surface (2b) of the safety sign portion (2), such that
in a normal mode only the at least one first light-emitting diode module (3) for illuminating the safety sign portion (2) is switched on, and
in an emergency mode the at least one first light-emitting diode module (3) for illuminating the safety sign portion (2) and the second light-emitting diode module (5) for illuminating the environment of the safety sign luminaire (1) are switched on.

6. Safety sign luminaire (1) according to any one of the preceding claims, wherein the second light-emitting diode module (5) comprises, for the at least one light-emitting diode (51) of the second light-emitting diode module (5), a Fresnel lens arrangement which is arranged for setting the emission direction of the light emitted by the at least one light-emitting diode (51) of the second light-emitting diode module (5) such that it is arranged so as to be rotatable about a light-emitting surface of the second light-emitting diode module (5).

7. Safety sign luminaire (1) according to claim 6, wherein the Fresnel lens arrangement is configured such that it:
in a first rotational position is configured to emit and/or direct the light emitted by the at least one light-emitting diode (51) of the second light-emitting diode module (5) in a direction orthogonal to the plane of the light-emitting surface of the second light-emitting diode module (5), and
in a second rotational position is configured to direct the light emitted by the at least one light-emitting diode (51) of the second light-emitting diode module (5) in a direction parallel to the plane of the light-emitting surface of the second light-emitting diode module (5).

8. Safety sign luminaire (1) according to any one of the preceding claims, wherein the safety sign portion (2) comprises, on the second side surface (2b), a second connecting device which can be brought into engagement with a first connecting device of the second light-emitting diode module (5), wherein optionally the first connecting device is in engagement with the second connecting device.

9. Safety sign luminaire (1) according to any one of claims 1 to 7, wherein the second light-emitting diode module (5) is integrated in the safety sign portion (2) on the second side surface (2b), optionally is potted.

10. System comprising a light-emitting diode module (5) and a safety sign luminaire (1) according to any one of the preceding claims, wherein
the light-emitting diode module (5) comprises at least one light-emitting diode (51) and at least one conductor loop (52) for electrically supplying the at least one light-emitting diode (51); and
the light-emitting diode module (5) is configured to be arranged on the second side surface (2b) of the safety sign portion (2) of the safety sign luminaire (1) such that
the at least one light-emitting diode (51) of the light-emitting diode module (5) is configured to illuminate the environment of the safety sign luminaire (1), and
the at least one conductor loop (32) of the safety sign luminaire (1) is configured for inductive transfer of electrical energy to the at least one conductor loop (52) of the light-emitting diode module (5), when the light-emitting diode module (5) is arranged on the second side surface (2b) of the safety sign portion (2).

## Revendications

1. Luminaire de signalisation de sécurité (1), comprenant :
une portion de signalisation de sécurité (2) au moins partiellement transmissive à la lumière, présentant deux surfaces opposées l'une à l'autre qui sont reliées l'une à l'autre par au moins deux faces latérales (2a, 2b), une surface (2c) au moins des deux surfaces opposées comprenant un signe de sécurité (4) ; et
au moins un premier module à diodes électroluminescentes (3) comprenant au moins une diode électroluminescente (31) destinée à éclairer la portion de signalisation de sécurité (2),
dans lequel
ledit au moins un premier module à diodes électroluminescentes (3) est disposé de telle sorte qu'au moins une première diode électroluminescente (31) est agencée pour coupler de la lumière dans la portion de signalisation de sécurité (2) via une première face latérale (2a) desdites au moins deux faces latérales (2a, 2b) de la portion de signalisation de sécurité (2), et
une seconde face latérale (2b) desdites au moins deux faces latérales (2a, 2b) de la portion de signalisation de sécurité (2) est conçue de telle sorte qu'un second module à diodes électroluminescentes (5) puisse être disposé sur la seconde face latérale (2b) de la portion de signalisation de sécurité (2), le second module à diodes électroluminescentes (5) comprenant au moins une diode électroluminescente (51),
dans lequel le luminaire de signalisation de sécurité (1) comprend, dans la zone dudit au moins un premier module à diodes électroluminescentes (3), au moins une boucle conductrice (32), et le luminaire de signalisation de sécurité (1) est agencé pour alimenter électriquement le second module à diodes électroluminescentes (5) en énergie électrique au moyen d'un transfert inductif de l'énergie électrique depuis ladite au moins une boucle conductrice (32) du luminaire de signalisation de sécurité (1) vers au moins une boucle conductrice (52) destinée à l'alimentation électrique du second module à diodes électroluminescentes (5), lorsque le second module à diodes électroluminescentes (5) et ladite au moins une boucle conductrice (52) destinée à l'alimentation électrique du second module à diodes électroluminescentes (5) sont disposés sur la seconde face latérale (2b) de la portion de signalisation de sécurité (2).

2. Luminaire de signalisation de sécurité (1) selon la revendication 1, dans lequel le second module à diodes électroluminescentes (5) est disposé sur la seconde face latérale (2b) de la portion de signalisation de sécurité (2) de telle sorte que ladite au moins une diode électroluminescente (51) du second module à diodes électroluminescentes (5) est agencée pour éclairer un environnement du luminaire de signalisation de sécurité (1).

3. Luminaire de signalisation de sécurité (1) selon la revendication 1 ou 2, dans lequel
ledit au moins un premier module à diodes électroluminescentes (3) comprend une pluralité de diodes électroluminescentes (31) destinées à éclairer la portion de signalisation de sécurité (2), et ladite au moins une boucle conductrice (32) du luminaire de signalisation de sécurité (1) est disposée entre deux diodes électroluminescentes (31), éventuellement sur une carte de circuit imprimé dudit au moins un premier module à diodes électroluminescentes (3), et/ou
ladite au moins une boucle conductrice (32) du luminaire de signalisation de sécurité (1) est disposée entre plusieurs premiers modules à diodes électroluminescentes (3).

4. Luminaire de signalisation de sécurité (1) selon l'une quelconque des revendications précédentes, dans lequel la portion de signalisation de sécurité (2) est réalisée sans cadre.

5. Luminaire de signalisation de sécurité (1) selon l'une quelconque des revendications précédentes, comprenant une unité de commande agencée pour commander ledit au moins un premier module à diodes électroluminescentes (3) et le second module à diodes électroluminescentes (5), lorsque le second module à diodes électroluminescentes (5) est disposé sur la seconde face latérale (2b) de la portion de signalisation de sécurité (2), de telle sorte que
en mode normal, seul ledit au moins un premier module à diodes électroluminescentes (3) destiné à éclairer la portion de signalisation de sécurité (2) est allumé, et
en mode de secours, ledit au moins un premier module à diodes électroluminescentes (3) destiné à éclairer la portion de signalisation de sécurité (2) et le second module à diodes électroluminescentes (5) destiné à éclairer l'environnement du luminaire de signalisation de sécurité (1) sont allumés.

6. Luminaire de signalisation de sécurité (1) selon l'une quelconque des revendications précédentes, dans lequel le second module à diodes électroluminescentes (5) comprend, pour ladite au moins une diode électroluminescente (51) du second module à diodes électroluminescentes (5), un agencement de lentilles de Fresnel qui est disposé pour régler la direction d'émission de la lumière émise par ladite au moins une diode électroluminescente (51) du second module à diodes électroluminescentes (5), de telle sorte qu'il est monté de façon rotative autour d'une surface d'émission de lumière du second module à diodes électroluminescentes (5).

7. Luminaire de signalisation de sécurité (1) selon la revendication 6, dans lequel l'agencement de lentilles de Fresnel est agencé de telle sorte qu'il :
dans une première position de rotation, est agencé pour émettre et/ou diriger la lumière émise par ladite au moins une diode électroluminescente (51) du second module à diodes électroluminescentes (5) dans une direction orthogonale au plan de la surface d'émission de lumière du second module à diodes électroluminescentes (5), et
dans une seconde position de rotation, est agencé pour diriger la lumière émise par ladite au moins une diode électroluminescente (51) du second module à diodes électroluminescentes (5) dans une direction parallèle au plan de la surface d'émission de lumière du second module à diodes électroluminescentes (5).

8. Luminaire de signalisation de sécurité (1) selon l'une quelconque des revendications précédentes, dans lequel la portion de signalisation de sécurité (2) comprend, sur la seconde face latérale (2b), un second dispositif de connexion pouvant être mis en engagement avec un premier dispositif de connexion du second module à diodes électroluminescentes (5), le premier dispositif de connexion étant éventuellement en engagement avec le second dispositif de connexion.

9. Luminaire de signalisation de sécurité (1) selon l'une quelconque des revendications 1 à 7, dans lequel le second module à diodes électroluminescentes (5) est intégré dans la portion de signalisation de sécurité (2) sur la seconde face latérale (2b), éventuellement est encapsulé.

10. Système comprenant un module à diodes électroluminescentes (5) et un luminaire de signalisation de sécurité (1) selon l'une quelconque des revendications précédentes, dans lequel
le module à diodes électroluminescentes (5) comprend au moins une boucle conductrice (52) destinée à l'alimentation électrique de ladite au moins une diode électroluminescente (51) ; et
le module à diodes électroluminescentes (5) est agencé pour être disposé sur la seconde face latérale (2b) de la portion de signalisation de sécurité (2) du luminaire de signalisation de sécurité (1) de telle sorte que
ladite au moins une diode électroluminescente (51) du module à diodes électroluminescentes (5) est agencée pour éclairer l'environnement du luminaire de signalisation de sécurité (1), et
ladite au moins une boucle conductrice (32) du luminaire de signalisation de sécurité (1) est agencée pour un transfert inductif d'énergie électrique vers ladite au moins une boucle conductrice (52) du module à diodes électroluminescentes (5), lorsque le module à diodes électroluminescentes (5) est disposé sur la seconde face latérale (2b) de la portion de signalisation de sécurité (2).
